(19) Europäisches Patentamt
European Patent Office
Office européen des brevets

(11) **EP 4 131 585 A1**

(12) **EUROPEAN PATENT APPLICATION**

(43) Date of publication:
**08.02.2023 Bulletin 2023/06**

(21) Application number: **21189267.4**

(22) Date of filing: **03.08.2021**

(51) International Patent Classification (IPC):
*H01M 12/06* (1974.07)

(52) Cooperative Patent Classification (CPC):
H01M 12/06

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Airbus Operations GmbH
21129 Hamburg (DE)**

(72) Inventor: **Linde, Peter
21129 Hamburg (DE)**

(74) Representative: **Isarpatent
Patent- und Rechtsanwälte Barth
Charles Hassa Peckmann & Partner mbB
Friedrichstrasse 31
80801 München (DE)**

(54) **AIRCRAFT OR SPACECRAFT AND METHOD OF RESTORING POWER**

(57) The invention provides an aircraft or spacecraft (90), in particular an airplane, comprising at least one metal-oxygen battery (1) which comprises at least an anode (3), a cathode (4) and an electrolyte (6). The metal-oxygen battery is configured and arranged in the aircraft or spacecraft in such a manner that at least the electrolyte (6, 48) can be replaced for at least partially restoring electrical power to be supplied by the metal-oxygen battery to one or more devices (94) in the aircraft or spacecraft. Furthermore, a method of at least partially restoring electrical power to be supplied by a metal-oxygen battery (1) to one or more devices (94) in an aircraft or spacecraft (90) is proposed, the method comprising a step (203, 204) of replacing at least a contaminated electrolyte (6, 48) by fresh electrolyte (6, 58). The invention in particular may contribute to providing a safe and reliable way of storing electrical energy with high energy density aboard an aircraft or spacecraft, as well as a simple and efficient way of recharging, i.e. restoring power to be supplied.

Fig. 7

EP 4 131 585 A1

**Description**

FIELD OF THE INVENTION

The invention relates to the field of supplying energy to devices in aircraft or spacecraft which are at least partly electrically operated, in particular devices requiring significant amounts of electrical energy. Further, the invention relates to a method of restoring power that is to be supplied to one or more such devices.

TECHNICAL BACKGROUND

Although the invention may be useful for any kind of aircraft or spacecraft, the invention and the underlying problem will be described in the following in exemplary manner with respect to an aeroplane.

Aeroplanes comprising electrical propulsion have already been proposed as such.

Storage of electrical energy is an important aspect in electrical propulsion of vehicles. For propulsion of aircraft or spacecraft based at least partly on electrical energy stored aboard the air or space vehicle, on-board batteries with high energy densities are desirable. Considering for instance the aspect of battery mass, a battery having a high energy density is desirable in order to meet the power requirements of the propulsion system while travelling and carrying a significant payload.

Currently, Lithium-ion batteries are the battery type established and available on the market that provides the highest available energy density, which is in the range of approximately 150-200 Wh/kg on a cell level or 100-130 Wh/kg on a system level.

Batteries carried by an aircraft or spacecraft should not heat up in uncontrollable manner. Even though Li-ion battery cells may have advantages e.g. regarding their considerable energy density, such cells also require considerable efforts for controlling the temperature.

Furthermore, regarding other types of batteries, metal-oxygen batteries as such have already been described. Batteries of this type also have been designated "metal-air" batteries. Metal-oxygen batteries provide the highest energy density of all known battery technologies and also are subject to research. One type of metal-oxygen battery that has shown realistic progress is the zinc-oxygen ($Zn-O_2$) battery. The zinc-oxygen battery can deliver, for example, an energy density in a range from approximately 250 Wh/kg up to approximately 350-400 Wh/kg.

A metal-air battery comprising a metal electrode as an anode, an air electrode as a cathode, and an electrolyte has already been described. As an example, a zinc-air battery using zinc as an electrode active material and an aqueous solution of potassium hydroxide has been described. Further, it has been found that as the reactions in the battery progress, a passivation film is formed on the anode which hinders the anode reaction, leading to a decrease in battery output. Approaches to deal with such detrimental processes in metal-oxygen batteries have been described.

For example, a metal-air battery as such, as well as a metal electrode recycling method and an electrode manufacturing method, are described in WO 2015/016101 A1. WO 2015/016101 A1 describes a way of preventing precipitated metal oxide or metal hydroxide from inhibiting the anode or cathode reaction.

Further, WO 2015/115480 A1 also relates to a metal-air battery and describes, for example, controlling the ion concentration of an electrolytic solution to prevent the development of a passivation film on an anode. WO 2015/115480 A1 describes measuring a physical property, preferably at least one of pH value, conductivity, viscosity and density, of the electrolytic solution, and controlling the ion concentration thereof based on the measured physical property value.

Furthermore, it has been described to use carbon nanotubes as air cathode catalysts in a Zn-air battery. A CoO/carbon nanotube hybrid catalyst has also been described in Li, Y. et al. Advanced zinc-air batteries based on high-performance hybrid electrocatalysts. Nat. Commun. 4:1805 doi: 10.1038/ncomms2812 (2013).

Against this background, it would be desirable to provide an aircraft or spacecraft which preferably can be propelled at least partially using electrical energy, in which overheating or fire caused by devices storing electrical energy can be prevented in reliable and effort-saving manner, and which in particular can also be provided with sufficient capacity for storing electrical energy in order to be able to provide a useful payload or passenger carrying capability and a useful range.

SUMMARY OF THE INVENTION

In view of this, the problem to be solved by the present invention is to provide an improved aircraft or spacecraft provided with a capability of storing significant quantities of electrical energy, in particular for consumption during flight, in a reliable, safe and practical manner. Further, a practical, safe and reliable method of recharging, or restoring power, is to be provided.

According to the invention, this problem is solved by an aircraft or spacecraft comprising the features of claim 1 and/or by a method comprising the features of claim 12.

Accordingly, there is proposed an aircraft or spacecraft, in particular an airplane, comprising at least one metal-oxygen battery which comprises at least an anode, a cathode and an electrolyte, wherein the metal-oxygen battery is configured and arranged in the aircraft or spacecraft in such a manner that at least the electrolyte can be replaced for at least partially restoring electrical power that is to be supplied by the metal-oxygen battery to one or more devices in the aircraft or spacecraft.

Moreover, a method of at least partially restoring electrical power to be supplied by a metal-oxygen battery to one or more devices in an aircraft or spacecraft, in particular an aircraft or spacecraft of this type, is provided. The method comprises a step of replacing at least a contaminated electrolyte of the metal-oxygen battery by fresh electrolyte.

An idea underlying the present invention is that, even if mechanical recharging for restoring the output delivered by the battery, i.e. replacing one or more components of the battery and particularly the electrolyte, requires mechanical interference on a regular basis, the actions necessary for mechanical recharging are quite easy, require only limited effort, and only a relatively short time is necessary to perform these actions. Use of a metal-oxygen battery in an aircraft or spacecraft, along with such mechanical recharging, therefore may provide a practical battery system with very high energy density and low fire risk. The invention may contribute to reducing the efforts necessary for protection against fire and attendant smoke, for example in comparison to conventional Li-ion batteries, and may also help to reduce the presence of toxic components.

Using a metal-oxygen battery, or metal-air-battery, for energy supply in an aircraft or spacecraft, in this manner is in particular useful to at least partially supply electrical power to a propulsion system of the aircraft or spacecraft.

In addition, the use of a metal-oxygen battery helps to avoid polluting the environment. Substances that are rather environmentally friendly may be chosen for an operational metal-oxygen battery, for example for the electrolyte. Environmentally friendly handling of the electrolyte of a metal-oxygen battery may be easier to achieve and require less effort than handling of hydrocarbon fuels such as kerosene, for example. Also, a relatively cost-effective electrolyte can be used.

Advantageous improvements and developments of the invention are contained in the dependent claims as well as in the description referring to the drawings.

In particular, the battery is configured to enable regular exchange at least of the electrolyte contained in the battery. In this way, battery output can be frequently restored and buildup of a passivation layer, in particular on the anode, can be delayed.

In a development, the electrolyte is a liquid. The battery in particular may be configured and arranged such that the electrolyte can be readily removed by drawing it from an interior of the battery through a hose or tube. Removal of liquid electrolyte through a hose or tube, for example using a pump, is rather simple to implement.

In a development, the metal-oxygen battery is configured and arranged in the aircraft or spacecraft so as to enable exchange of the anode. In this way, battery output can be substantially fully restored by removing a passivated and/or spent anode and replacing it with a fresh one. In particular, the battery is configured to also enable repeated exchange of the anode.

According to an improvement, the anode is releasably mountable in an operational position thereof as part of the battery. In particular, a mounting device or mounting devices for releasably mounting the anode may be provided, for instance comprising a locking mechanism providing a releasable positive engagement, e.g. a latching or detent mechanism. Alternatively, the mounting device(s) may comprise a threaded and/or bolted connection. In this way, the anode can be replaced in a relatively simple manner when necessary, while the anode is safely mechanically retained during operation of the battery.

In a development, the mounting device(s) is/are arranged in such a way that the anode can be fixed at opposite end faces thereof. In this manner, for example, an active surface on side faces of the anode is not reduced by providing the mounting device(s).

In a preferred development, the metal-oxygen battery is integrated in a structure of the aircraft or spacecraft, in particular in an airframe. In particular, the metal-oxygen battery is integrated in a structural component or in structural components of the aircraft or spacecraft. By such integration of the battery, the overall efficiency, for example regarding weight and space requirements, can be improved. Furthermore, by integration of the battery in a structure such as the airframe, in particular the structural component or structural components, some elements may have a function both in the battery and the structure, which renders these elements at least partly multifunctional and helps to save weight.

According to a development, the metal-oxygen battery forms part of a load-bearing structural component of the aircraft or spacecraft, in particular of a beam-type structural component. Hence, battery parts that add weight to the aircraft or spacecraft can advantageously fulfil a further function in the load-bearing component. In this way, mass added by the metal-oxygen battery can be used more efficiently.

In an improvement, one or more part(s) of the metal-oxygen battery is or are configured and arranged so as to contribute to the mechanical load-bearing capacity of the structural component. As an example, the one or more part(s) of the metal-oxygen battery may contribute to the area moment of inertia of the structural component.

In particular, it may be preferable if the mounting device(s) is/are configured to enable an attachment of the anode to adjacent component(s), in particular a casing portion, in such a manner that the anode may contribute to the mechanical load-bearing capacity of the structural component.

Further, according to an improvement, the metal-oxygen battery comprises a plurality of individual battery cells. The battery cells may in particular be arranged in a row along a longitudinal direction of extension of the structural component. In this way, the batteries cells may be connected in suitable manner to provide electrical output as desired. Also, the battery cells in particular can each comprise an individual anode and can be individually serviced. This may facilitate replacement of parts, in particular of the anode of each cell by limiting the weight and size thereof.

According to a development, the metal-oxygen battery is integrated in a structural component of a wing, in particular a wing spar. For example, in this way, the battery can be accessed in an advantageous and simple manner in order to perform the replacement at least of the electrolyte. The access during servicing of the battery can be provided, for example, on the upper surface of the wing.

In other developments, the metal-oxygen battery may be integrated, additionally or alternatively, in one or more structural components different from components of a wing. For example, the metal-oxygen battery may in accordance with a development be integrated into an elongate structural component forming part of an airplane fuselage.

According to an improvement, the metal-oxygen battery comprises a casing adapted to accommodate the cathode, the electrolyte and the anode, wherein the casing at least partially forms part of the structural component. In particular, the casing may include an elongate, profile-type component. For example, the casing may comprise a U-shaped section. Using a casing, the metal-oxygen battery can be well protected, while other components of the aircraft or spacecraft in the vicinity of the structural component can be protected from the battery, and in particular from the electrochemical reactions involving the anode, cathode and electrolyte.

In particular, the casing or portion(s) thereof forming part of the structural component, for example of the wing spar, may be formed from aluminum or from an aluminum alloy, or alternatively, may be formed from a fibre metal laminate (FML) or from a fibre-reinforced synthetic material, such as a carbon-fibre-reinforced plastic material (CFRP), for example. The fibre-reinforced synthetic material may preferably comprise a thermoplastic matrix. The thermoplastic matrix may in particular be advantageous due to its resistance against higher temperatures.

The casing may be provided with one or more additional protective layer(s) in order to electrically isolate the battery and/or in order to avoid electrochemical interaction of the anode, cathode and/or electrolyte with the casing.

In a development, the cathode is formed with a hollow cross-sectional shape, in particular a U-type shape. In this way, the cathode can, for instance, be provided with a shape adapted to receive the anode, in particular an anode of relatively simple shape. Accordingly, this development may further facilitate replacement of the anode when required or appropriate.

In a development, an outer shape of the cathode is substantially adapted to an inner space provided by the casing. This helps to accommodate the cathode in a space-saving manner.

According to a further improvement, the anode is arranged, in an operational state of the metal-oxygen battery, between two substantially wall-shaped leg portions of the cathode. In particular, the anode may be configured as a flat, plate-shaped element. Such an architecture of the metal-oxygen battery facilitates mechanical recharging, i.e. at least partially restoring the power deliverable by the battery, by replacement of the electrolyte and/or of the anode.

In particular, in a development, the aircraft or spacecraft comprises one or more electrical propulsion devices or hybrid propulsion devices or a combination thereof, and the metal-oxygen battery is configured to supply electrical energy for powering the electrical and/or hybrid propulsion devices at least partially. The high energy density afforded by the metal-oxygen battery facilitates the supply of electrical or hybrid propulsion devices requiring considerable electrical power.

In a development, the metal-oxygen battery is a zinc-oxygen battery, wherein the anode comprises zinc or a zinc alloy. A zinc-oxygen battery can be well implemented and provides a powerful supply of electrical energy.

According to a preferred development, the electrolyte may comprise an aqueous solution of potassium hydroxide.

In alternative developments, use of a battery of the metal-oxygen type, with the metal being a metal different from zinc or a zinc alloy, is also conceivable within the present invention. In this case, an electrolyte adapted to the different choice of anode material can be selected, which may also be a liquid.

Furthermore, in a preferred development, the fresh electrolyte, replacing the contaminated electrolyte, has a pH value of at least substantially 14. In particular, the pH value of the fresh electrolyte is substantially 14. Such a pH avoids or at least delays the formation of a passivation layer, in particular a zinc oxide layer, on the anode.

According to a further development, the metal-oxygen battery comprises an openable and closeable lid enabling access to an interior of a battery cell or part thereof when the lid is opened, wherein the lid in particular comprises at least two openable and closeable lid portions. In this way, the mechanical recharging by replacing at least the electrolyte can be conveniently performed, while the battery cell is well protected during operation.

In an improvement, a first one of the lid portions is openable in order to enable replacement of the electrolyte. Moreover, in a further improvement, a second one of the lid portions is openable in order to enable replacement of the anode. For example, it can be provided that both the first and second lid portions are to be opened for replacement of the anode. In cooperation, the lid portions may in a closed state thereof substantially close an open end of a casing main portion of the metal-oxygen battery. In this way, by providing the lid portions, the lid is adapted to the different steps of mechanical recharging, including a step of only replacing the electrolyte and a step of replacing both the electrolyte and the anode, for instance.

In particular, in a development each cell may be provided with an openable and closeable lid, which preferably comprises the first lid portion and the second lid portion. In this way, each cell can be conveniently accessed separately for replacement of electrolyte and, if required, of the anode.

According to a preferred development of the method, the step of replacing at least the contaminated electrolyte is carried out while the aircraft or spacecraft is on the ground, in particular while the aircraft is parked at an airport. Advantageously, replacing the electrolyte requires considerably less effort and time in comparison to conventional refilling of kerosene tanks.

In a further improvement, the method further comprises a step of replacing a passivated anode of the metal-oxygen battery with a fresh anode. Along with the provision of fresh electrolyte, this provides a full restoration of the output of the metal-oxygen battery and of the power it can deliver to the electrical loads.

In a development, a step of removing a passivation layer from the passivated anode that has been removed from the metal-oxygen battery can be performed, in particular in order to enable the anode to be re-used as a fresh anode in a later step. In this way, an anode may be re-used several times, which helps to efficiently use the metal of the anode, e.g. zinc or zinc alloy. Accordingly, the process is rendered even more environmentally friendly and economically advantageous.

Moreover, in a development, the method further comprises venting hydrogen accumulated within the metal-oxygen battery. Thus, it can be prevented that accumulated hydrogen has a negative influence on battery function.

In particular, venting of the hydrogen gas may be carried out simultaneously with removing the contaminated electrolyte. The venting can in this way be performed in expedient and effective manner.

Furthermore, according to a preferred development, the step of replacing the contaminated electrolyte is carried out in a recurrent manner, in particular is carried out at regular intervals.

In a development, the ph value of the electrolyte is monitored. In particular, the step of replacing the contaminated electrolyte is performed or scheduled to be performed if the decreasing pH value of the electrolyte approaches or reaches a predefined threshold, for example a value of 13.

In a further improvement, the step of replacing the anode is carried out depending on the buildup of a passivating layer on the anode, in particular on the buildup of a ZnO layer. The anode thus can be replaced when this is determined to be appropriate.

By carrying out the electrolyte replacement, in particular the electrolyte replacement and venting of hydrogen, at a certain frequency and/or depending on the pH of the electrolyte, ZnO buildup on the anode may be delayed, and the interval between anode replacements can be prolonged.

According to an improvement, the step of replacing the anode is carried out less frequently than the step of replacing the electrolyte. In particular, the step of replacing the anode may be carried out after the electrolyte has been replaced one or more times without exchanging the anode. Time and effort can be saved in this manner. There is also disclosed herein a use of a metal-oxygen battery, in particular a zinc-oxygen battery, in an aircraft or spacecraft, in particular in an aeroplane, wherein the battery and/or cells of the battery is/are integrated or semi-integrated into at least one structural component of the aircraft or spacecraft.

The improvements, enhancements and developments of the present invention may be arbitrarily combined with each other whenever this makes sense. Moreover, other possible enhancements, developments and implementations of the present invention may comprise combinations of features of the invention which have been described above or will be described in the following in relation to the detailed description of embodiments, even where such a combination has not been expressly mentioned.

In particular, the improvements, developments and enhancements of the invention described above may be applied in analogous manner to the aircraft or spacecraft and to the method proposed herein.

BRIEF DESCRIPTION OF THE DRAWINGS

The invention will be explained in the following with reference to the schematic figures of the drawings which illustrate examples and embodiments of the invention. Herein:

Fig. 1    shows a schematic illustration of a zinc-oxygen battery cell having an anode, a cathode and an electrolyte;

Fig. 2    shows in schematic manner the buildup of zinc oxide (ZnO) on the anode depending on pH value of the electrolyte, for a cell of the type displayed in Fig. 1;

Fig. 3     shows a schematic cross-sectional view of a zinc-oxygen battery cell according to an embodiment of the invention, the cell being configured to enable replacement of an electrolyte and/or of an anode;

Fig. 4     illustrates removal of the electrolyte from the cell of Fig. 3 and venting of gaseous hydrogen, in a schematic cross-sectional view, according to an embodiment;

Fig. 5     illustrates filling the cell of Fig. 3 with fresh electrolyte, in a schematic cross-sectional view, according to an embodiment;

Fig. 6     illustrates removal of the anode from the cell of Fig. 3 for replacement thereof, according to an embodiment;

Fig. 7     shows a schematic perspective partial view of a wing of an airplane, comprising zinc-oxygen battery cells of the type illustrated in Figs. 3-6 integrated in an airframe, the cells being integrated in wing spars in accordance with an embodiment of the invention;

Fig. 8     illustrates in schematic manner the replacement of electrolyte using a bowser-type ground vehicle, for an aircraft comprising a wing of the type shown in Fig. 7;

Fig. 9     illustrates the operation of an aircraft comprising zinc-oxygen battery cells, in particular in accordance with Fig. 7, including replacement of electrolyte or electrolyte and anodes of opened battery cells integrated into the wing box, according to an embodiment; and

Fig. 10     a schematic longitudinal sectional view of a battery cell as integrated in the wing of Fig. 7.

The enclosed drawings are intended to illustrate embodiments of the invention so that the invention may be further understood. The drawings, in conjunction with the description, are intended to explain principles and concepts of the invention. Other embodiments and many of the advantages described may be inferred from the drawings. Elements of the drawings are not necessarily drawn to scale.
Elements, features and components which are identical or which have the same function or effect have been labeled in the drawings using the same reference signs, except where explicitly stated otherwise.

DETAILED DESCRIPTION

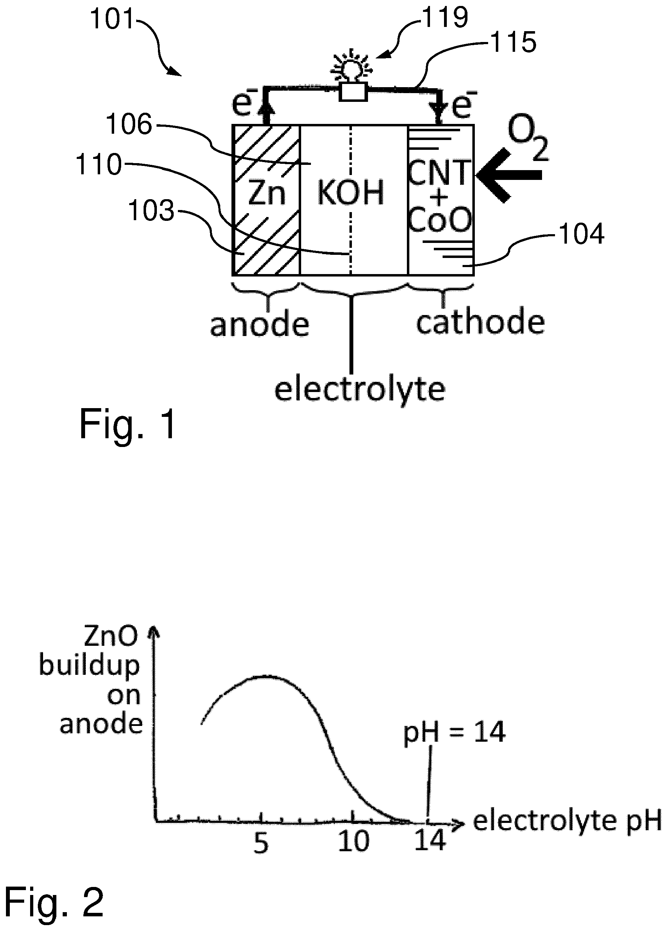

Figs. 1 and 2 illustrate the basic function of an exemplary metal-oxygen battery 101, in this case a zinc-oxygen or Zn-O$_2$ battery cell.
Fig. 1 schematically shows the Zn-O$_2$ battery cell 101, which comprises an anode 103 made of zinc (Zn) or of a zinc alloy, an aqueous solution of potassium hydroxide (KOH) as a liquid electrolyte 106, and a cathode 104, the cathode 104 comprising e.g. cobalt oxide (CoO) and carbon nanotubes (CNT).
Within the electrolyte 106 and between the anode 103 and the cathode 104, a separator 110 is arranged. The separator 110 is in this example formed as a thin, electrically insulating membrane which prevents short-circuit within the cell 101 but nevertheless allows charged particles to pass through. The separator 110 may for example contain glass-fibres.
In a new, unused battery cell 101 of the type schematically depicted in Fig. 1, the fresh, uncontaminated electrolyte 106 has a pH of substantially 14. The fresh, unused anode 103 has a substantially bare, metallic zinc surface without passivation.
During discharge, the battery cell 101 supplies electric current to an electrical load 119 via a conductor 115, while anode reactions take place in several steps and can be summarized as follows:

$$Zn \quad\quad\quad \rightarrow \quad Zn^{2+} + 2\,e^- \quad\quad\quad \text{Eq. (1)}$$

$$Zn^{2+} + 4\,OH^- \quad\quad\quad \rightarrow \quad Zn(OH)_4^{2-} \qu\quad\quad \text{Eq. (2)}$$

$$Zn(OH)_4^{2-} \qu\quad\quad \rightarrow \quad ZnO + H_2O + 2\,OH^- \ququad \text{Eq. (3)}$$

$$Zn + 2\,H_2O \quad\longrightarrow\quad Zn(OH)_2 + H_2 \uparrow \qquad\qquad Eq.\ (4)$$

The free electrons from Eq. (1) are moving through the anode 103 to the conductor 115 connected thereto. The electric circuit is closed via the electric consumer 119 to the cathode 104.

It can be seen that zinc oxide (ZnO) is created in Eq. (3). ZnO has a negative impact on battery function. Furthermore, in Eq. (4) hydrogen gas ($H_2$) is created, which e.g. can cause some loss of performance.

The corresponding cathode reaction is as follows:

$$O_2 + 2\,H_2O + 4e^- \quad\longrightarrow\quad 4\,OH^- \qquad\qquad Eq.\ (5)$$

Thus oxygen ($O_2$) must be continuously supplied at the cathode 4 from an external source. It could be separated from air. Accordingly, the battery 101 may also be designated a "metal-air" battery. Alternatively, the required oxygen may be provided in a closed system.

During discharge of the battery 101, a layer of zinc oxide or ZnO develops on the anode 103, forming a passivating layer on the surface of the anode 103.

Due to the reactions occurring in the battery 101, the electrolyte 106 is contaminated, and the electrolyte pH decreases. Fig. 2 schematically illustrates the buildup of zinc oxide (ZnO) as a function of the pH value in the aqueous solution that forms the electrolyte 106, decreasing from the initial value of pH = 14 in the fresh liquid 106. At an ideal pH value of the electrolyte 106, which is 14, no ZnO is built up. However, from Fig. 2 it can be seen that when the pH is dropping, a buildup of ZnO starts, passivating the zinc surface of the anode 103. The ZnO buildup will decrease battery function.

There are two ways to restore the pH value of the electrolyte 106. One way is so-called chemical recharging, which is a rather complex process for this type of battery. Another way is by mechanical recharging, which involves replacement of the electrolyte 106, for example regularly, and replacement of anode, for example depending on buildup.

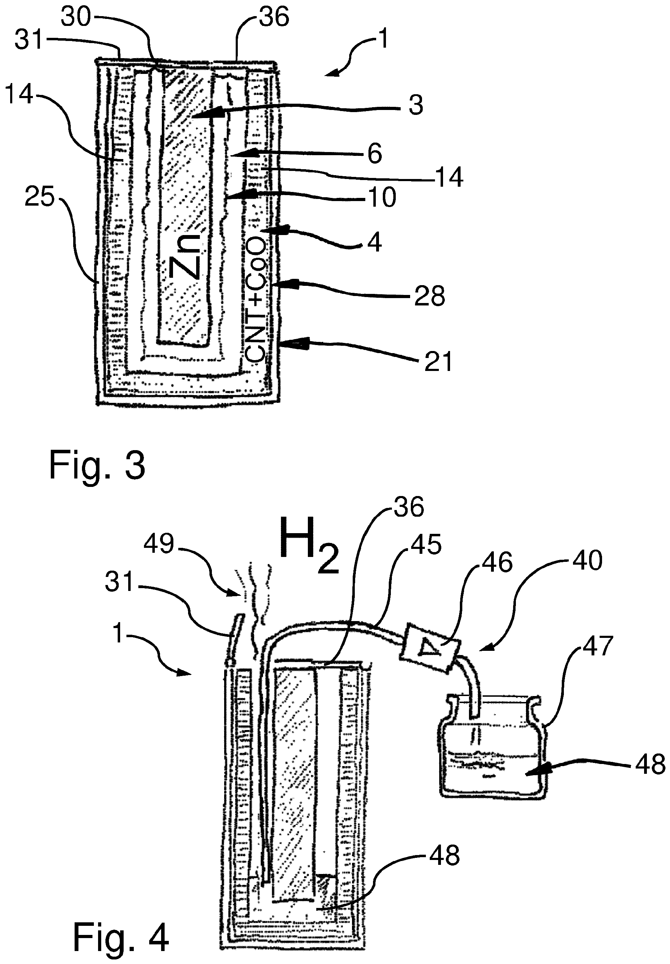

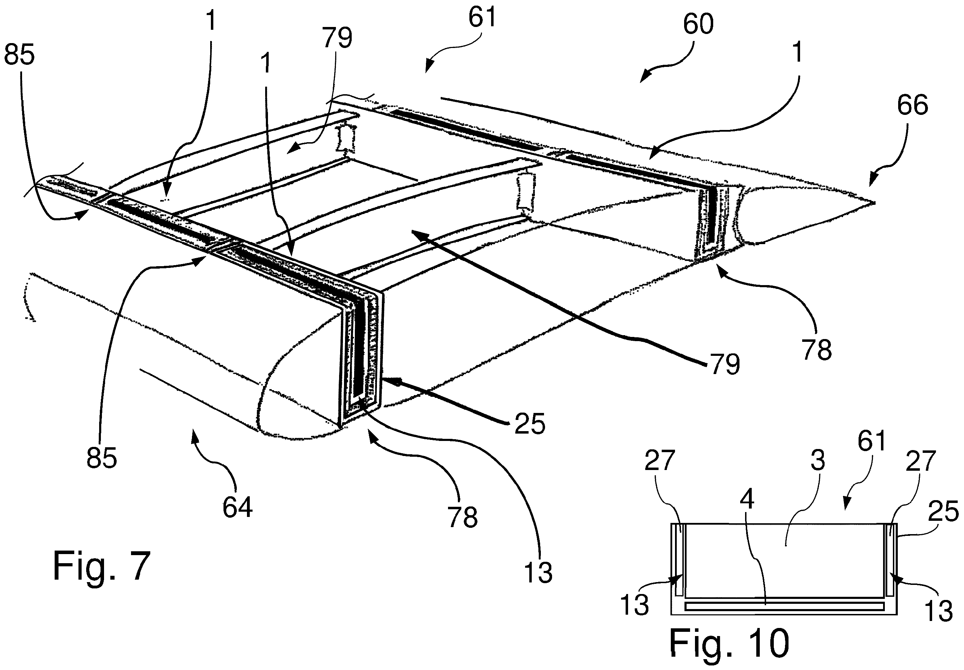

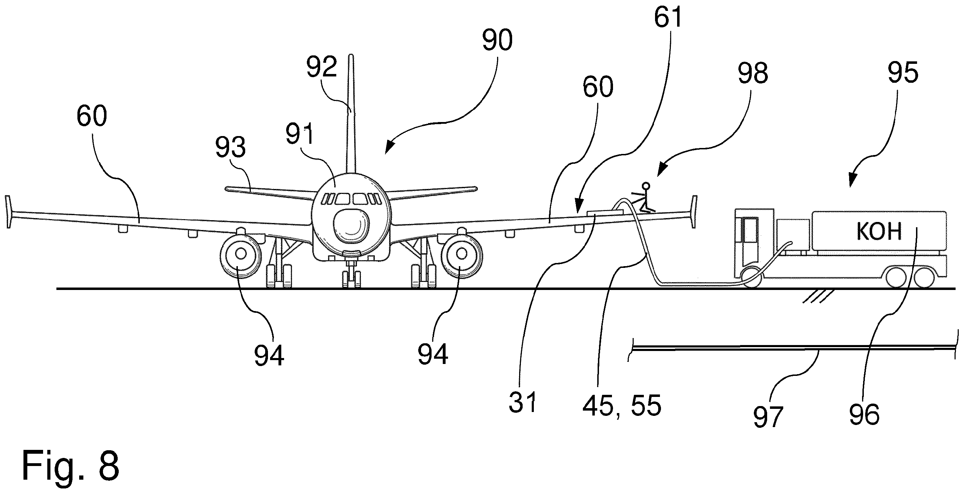

Figs. 3-8, 10 illustrate a metal-oxygen battery cell 1 adapted for integration into an aircraft or spacecraft, as well as an airplane 90 into which battery cells 1 are integrated, according to an embodiment of the present invention. The airplane 90 according to this embodiment may be a commercial aircraft, such as a passenger aeroplane, is shown in its entirety in front view in Fig. 8, and comprises a fuselage 91, vertical and horizontal stabilizers 92 and 93, respectively, wings 60, and propulsion devices 94 attached on the wings 60. Fig. 7 displays part of a wing 60 of the airplane 90. A leading edge 64, a trailing edge 66 and an upper side 61 of the wing 60 are schematically displayed. A plurality of battery cells 1 are integrated in the structure of the wing 60 in exemplary manner, forming in cooperation one or more metal-oxygen batteries.

The propulsion devices 94 are electrical propulsion devices powered by electric current provided by the battery cells 1. Alternatively, the propulsion devices 94 are hybrid propulsion devices, wherein the battery cells 1 provide part of the power required, while the rest of the necessary power is provided on the basis of combustion of an appropriate fuel such as kerosene, for instance. For example, a kerosene-fueled engine and an electrical motor may be arranged so as to act on the same shaft.

Even though the propulsion devices 94 are schematically shown in Fig. 8 to comprise a shape in the manner of conventional jet engines, it should be understood that the depiction of the devices 94 in Fig. 8 is merely schematic, and that the propulsion devices 94 may be shaped and/or arranged differently.

The metal-oxygen battery cell 1 in Figs. 3-8, 10 is a zinc-oxygen battery cell operating in a manner analogous to the cell 101 described above with reference to Figs. 1 and 2. Reference is made to the explanations above regarding the electrochemical way of operation. The zinc-oxygen cell 1 comprises an anode 3, a cathode 4 and a liquid electrolyte 6. In the battery cell 1, too, the electrolyte 6 preferably is an aqueous solution of potassium hydroxide (KOH). Between the anode 3 and the cathode 4, a separator 10 is arranged, which corresponds to the separator 110.

The battery cells 1 are used as on-board batteries with high energy density for supplying the devices 94. The cells 1 are thus particularly useful in connection with electric propulsion or hybrid propulsion in the aircraft or spacecraft and preferably are used to supply the propulsion devices 94. The cells 1 however can also be used as power supply for other electrical loads in an aircraft or spacecraft such as the airplane 90.

In addition, based on their design in the form of zinc-oxygen battery cells 1, and based on the use of an aqueous solution of potassium hydroxide as an electrolyte 6, the cells 1 have a low toxicity, a low risk of fire and/or smoke, and also are cost-effective. Specifically, potassium hydroxide is a compound that can be obtained at comparatively low cost, and its use in aqueous solution in the battery cells 1 furthermore reduces the risk of fire.

In accordance with the embodiment displayed in Figs. 3-8 and 10, $Zn\text{-}O_2$ battery cells 1 are thus arranged and configured in the airplane 90 to implement a mechanical recharging system by a suitable architecture of the battery and its cells 1, which will be described in more detail in the following. Semi-integration of the battery cells 1 in an airframe will be described.

The metal-oxygen battery cell 1 is configured in a manner that makes it possible to expediently replace the electrolyte 6, once it is contaminated to an extent defined beforehand, and also to replace the anode 3 in a simple manner. In this way, the capacity of the battery 1 to provide electric current, which is impaired over time by the drop in pH and attendant ZnO buildup, can be restored by "mechanical recharging". Mechanical recharging involves regular replacement of the electrolyte 6 and replacement of the anode 3, e.g. depending on ZnO buildup, as will be described in more detail below.

Fig. 3 displays the $Zn-O_2$ battery cell 1, operating during discharge according to the electrochemical principles explained above with respect to Figs. 1 and 2, in sectional view, with its architecture modified in comparison to Fig. 1. The architecture of the $Zn-O_2$ battery in Fig. 3 has been developed to facilitate mechanical recharging of the battery.

The metal-oxygen battery cell 1 comprises a casing 21, shown for example in Fig. 3, having a substantially rectangular cross-section. The casing 21 comprises a casing main portion 25 and a lid 30. The casing main portion 25 may be profile-shaped and elongate, accommodating components of several cells 1 positioned in a row along a longitudinal direction of the casing 21, or the portion 25 may be box-shaped, for example so as to accommodate components of a single cell 1. The casing main portion 25 in Fig. 3 is substantially U-shaped in a transverse cross-section thereof and comprises an opening at its top side, which in the state of Fig. 3 is substantially completely closed by the lid 30.

In an interior of the casing 21, the casing main portion 25 houses the cathode 4, the anode 3, as well as the separator 10 and the electrolyte 6 which are arranged between the anode 3 and the cathode 4. The cathode 4 is U-shaped in cross-section, too, and substantially follows an inner shape of the casing main portion 25.

The cathode 4 is formed with a hollow cross-sectional shape. In Fig. 3, the anode 3 is placed centrally, whereas the cathode 4 is formed around it, in a U-shaped manner. The shape of the cathode 4 may also be considered a C-shape when turned through 90 degrees. However, it is preferable that the open side of the cathode 4 is turned upward and coincides with the open side of the casing main portion 25.

Due to its U-shaped cross-section, the cathode 4 comprises two substantially wall-shaped leg portions 14, between which the anode 3 is arranged in the operational state of the zinc-oxygen battery cell 1 in Fig. 3.

In order to operate the $Zn-O_2$ battery cell 1 effectively, the electrolyte 6 should have a pH value of substantially 14, ZnO buildup on the anode 3 is to be prevented, and $H_2$ gas production should be limited.

In a fresh cell, the pH value of the electrolyte 6 is 14. During operation, the pH decreases and ZnO buildup starts, see Fig. 2, as outlined above.

In order to implement prolonged efficient operation of the zinc-oxygen battery, the battery cells 1 are configured and arranged to enable replacement of the electrolyte 6, venting of hydrogen gas, and replacement of the anode 3. The architecture of the metal-oxygen battery cell 1 facilitates mechanical recharging, i.e. at least partially restoring the power deliverable by the battery cell 1, by replacement of the electrolyte 6 and/or of the anode 3.

By carrying out venting of $H_2$ and electrolyte replacement at a certain frequency, ZnO buildup may be delayed, and the interval between anode replacements can be prolonged. Venting of hydrogen gas is carried out simultaneously when replacing the electrolyte 6.

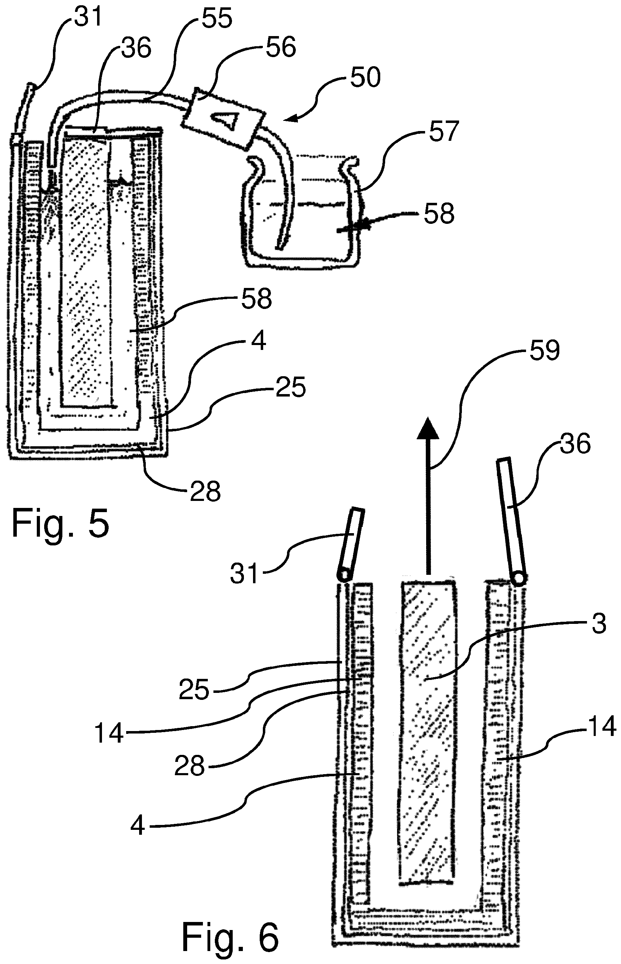

The lid 30 of the casing 21 can be opened and closed. More specifically, Figs. 3 and 4 show that the lid 30 comprises a first lid portion 31 and a second lid portion 36. The first lid portion 31, on the left side of the top of the casing 21 in Figs. 3 and 4, can be opened for replacing the liquid electrolyte 6. Opening the lid portion 31 only partly exposes the top of the interior of the battery cell 1. The second, larger portion 36 of the lid 30 can be opened, see Fig. 6, to replace also the anode 3.

Figs. 4 and 5 illustrate the replacement of the electrolyte 6 and venting of $H_2$ as a step in mechanical recharging of the $Zn-O_2$ battery cell 1, while the anode 3 remains in the cell 1.

In Fig. 4, a step of emptying the spent electrolyte 48 as a first substep 210 in electrolyte replacement is shown. The first lid portion 31 on the top side of the battery cell 1 has been opened in order to access and remove the spent electrolyte 48. An electrolyte removing device 40 is provided and comprises a hose 45 and a pump 46. The hose 45 is lowered into the battery interior, which holds the spent electrolyte 48. The spent, contaminated electrolyte 48 is then drained via the hose 45 using the pump 46. At the same time, hydrogen gases trapped in the battery cell 1 are vented as indicated by reference numeral 49. The spent, drained electrolyte 48 is received in a container 47.

Then, see Fig. 5, a step 220 of refilling the battery cell 1 with fresh, new electrolyte 58 is performed. An electrolyte refilling device 50 is provided, which comprises a hose 55 and a pump 56. The refilling device 50 may correspond to the removing device 40, and in this case, the pump is reversibly operable. Alternatively, the removing and refilling devices 40, 50 may be separate, distinct devices. Fresh electrolyte 58 in the form of a strongly alkaline aqueous solution of potassium hydroxide, having a pH value of 14, is provided in a container 57. The fresh electrolyte 58 is an aqueous solution of KOH having a concentration suitable for use of the solution as an electrolyte 6 in the $Zn-O_2$ cell 1. The fresh electrolyte 58 may for example be a 4 to 9 M (mol/litre) (at standard conditions of T = 25°C, p = 1 bar) potassium hydroxide (KOH) aqueous solution, in particular an approx. 30% by weight potassium hydroxide aqueous solution, with 30% by weight corresponding to 6,8496 mol/l KOH. Using the hose 55 and the pump 56, in similar manner as in Fig. 4 but with opposite direction of flow, new electrolyte 58 is filled into the interior of the battery cell 1, again through the opening in the top thereof. Then, the lid portion 31 is closed and the cell 1 is operated to supply electric current again.

By replacing the electrolyte 6 as described above, but without replacing the anode 3, a partial "recharge" of the cell 1 can be performed. ZnO buildup on the anode 3 is delayed by replacing the electrolyte 6. Accordingly, the cell performance can be improved again to a significant extent, and the operational time remaining until anode replacement is necessary can be extended.

Depending on the extent of passivation of the anode 3 by the ZnO buildup, a complete "recharge" of the cell 1 can be performed, after several steps of electrolyte replacement. For a complete "mechanical recharge", the spent electrolyte 48 is removed as described above with reference to Fig. 4. Then, the anode 3 is exchanged and the cell 1 is refilled with fresh electrolyte 58 as described above with reference to Fig. 5.

The anode 3 is formed and arranged to be easily and repeatedly replaceable. The second lid portion 36 can be opened to access the anode 3 and lift it out of the space between the leg portions 14 of the cathode 4 in direction 59. This is schematically illustrated in Fig. 6. A fresh anode 3 with clean, bare metal surfaces is then inserted between the leg portions 14.

The used anode 3, removed from the battery cell 1 and replaced by a fresh anode, can in a variant of the embodiment be treated so as to enable it to be re-used. For example, the passivating ZnO layer could be removed via a mechanical process such as, for example, grinding. Alternatively, it could be envisaged to remove the ZnO layer by a chemical process.

The battery cells 1, forming the zinc-oxygen battery, are integrated in the airframe of the airplane 90. Combining the high energy density of the zinc-oxygen cells 1 with an integration thereof into structural components makes it possible to implement an efficient way of supplying electrical power for the airplane 90. The embodiment thus provides a Zn-$O_2$ battery system combining integration of the battery in the airframe as well as mechanical recharging of the battery.

More specifically, in the embodiment of Figs. 3-8 and 10, the metal-air battery, comprising the battery cells 1, forms part of wing spars 78. Each wing spar 78 is an elongate structural, load-bearing component of the airplane 90.

Fig. 7 shows, in exemplary manner, a section of a wing box in which the wing spars 78 have been designed as multifunctional airframe elements as well as battery casings, with a design enabling mechanical recharging of the Zn-$O_2$ battery cells 1. The battery cells 1 are arranged so as to form part of the interior of the wing spars 78, which include openings on top of each spar 78 for access to the cells 1.

Integration of the cells 1 into the wing spars 78 advantageously provides easy access to the cells 1 and also provides a distance between the battery cells 1 and the passenger cabin.

In this manner, a "structural battery", in other words a battery that does not only provide storage of electrical energy but also is a structurally load-bearing part, can be implemented.

In Fig. 7, the casing main portion 25, which forms a structural, load-bearing element of the wing spar 78, is provided with a U-shaped cross-section, corresponding to the shape of the portion 25 shown in Figs. 3-6. The casing main portion 25 is connected to further structural components of the wing 60. In particular, Fig. 7 shows that wing ribs 79 extend transversely to the spars 78 and are attached, in exemplary manner, to the casing main portion 25 of each wing spar 78.

Along the longitudinal direction of extension of the casing main portion 25, battery cells 1 are arranged in a row. Cell boundaries 85 between adjacent battery cells 1 are indicated in Fig. 7 in exemplary manner. The interior of the casing main portion 25 may as such be subdivided at the boundaries 85 by transverse walls or similar, which may form integral parts of the portion 25 but are not shown in detail in Fig. 7, or dividing elements may be inserted into the interior of the casing main portion 25 at the locations of the boundaries 85. In this manner, compartments for receiving further elements of the battery cells 1 can be formed along the wing spar 78.

The internal design of the battery cells 1 in Fig. 7 is the same as in Figs. 3-6, decribed above. The anodes 3 are arranged between the leg portions 14 of the cathode 4, in a manner which makes it possible to exchange them in a relatively simple manner.

Even though the battery is divided into a plurality of cells 1, the anodes 3, which are made from metal, each may nevertheless be relatively heavy. The anodes 3 each are provided with a flat, plate-like shape, which can be gripped and lifted relatively easily. The anode 3 may comprise means such as undercuts, recesses, edges, holes or protrusions on sides thereof, adapted to facilitate gripping and lifting of the anode 3.

As an example, each of the plurality of cells 1 accommodated along the length of the spar 78 may be from approximately 0,5 m to approximately 1,0 m long. However, other lengths of the individual cells 1 are conceivable. It is preferable to select a length of the cell 1 that allows convenient handling in particular of the anode 3 during exchange thereof.

In the embodiment displayed in Fig. 7, the wing spar 78 has a beam-type shape. During operation of the airplane 90 as well as on the ground, the spar 78 will be subject to various loads and is configured to sustain these loads. The casing main portion 25 contributes to the area moment of inertia of the beam-type spar 78, and hence to the resistance of the spar 78 against bending, for example.

In the embodiment of Fig. 7, both the cathode 4 and the anode 3 additionally contribute to the area moment of inertia of the wing spar 78 and to the mechanical strength thereof.

The cathode 4 comprises a structure, e.g. of grid-type, which may preferably comprise carbon nanotubes and/or carbon fibres, enabling $O_2$ required for the electrochemical reactions to pass.

The carbon fibre and/or carbon nanotube structure of the cathode 4 is configured to be self-supporting, i.e. the structure at least has sufficient mechanical strength to be able to support its own weight and/or to sustain inertial forces during aircraft operation. Furthermore, the structure of the cathode 4 is configured to support additional loads to a limited extent, in such a manner that the structure of the cathode 4 is able to contribute, at least to some extent, to the support of structural loads by the wing spar 78. Accordingly, the cathode 4, too, contributes to the area moment of inertia of the spar 78 and also, to some degree, to the resistance of the spar 78 e.g. against bending.

The plate-shaped anode 3 is made from metal, preferably zinc or a zinc alloy in the embodiment described. By virtue of the elongate shape of the anode 3 and its upright, slender and for example rectangular cross-section, the anode 3 is well adapted to significantly contribute to the area moment of inertia of the spar 78. The anode 3 thus further increases the strength of the spar 78, e.g. against bending. The anode 3 can be formed as a solid component, i.e. made from solid metal. Additionally, the anode 3 can be provided with a structure increasing its surface, for example by providing the anode 3 with holes, recesses, grooves, bores, or the like. Alternatively, the anode 3 may be formed as a solid sheet with essentially plain, smooth side surfaces.

The anode 3 for this purpose is mechanically connected to the casing main portion 25 at opposite end faces 13 of the anode 3. One of the end faces 13 is schematically indicated in Fig. 7. Mounting devices 27, schematically shown in Fig. 10, are provided in the region of the end faces 13 for releasably fastening the anode 3 in its operational position and at the same time make it possible for the anode 3 to effectively contribute to the mechanical resistance of the spar 78.

The mounting device 27 may comprise a locking mechanism providing a releasable positive engagement, e.g. a latching or detent mechanism. Alternatively, the mounting device 27 can be adapted to implement a threaded connection of the anode 3 and, for example, the casing main portion 25, e.g. via threaded bolts.

The mounting devices 27 make it possible to easily exchange the anode 3. The mounting devices 27 could, in a variant of the embodiment of Figs. 7 and 10, be operable from a top side 61 of the wing 60 in order to easily release the fastening mechanism and remove the anode 3.

Even though not explicitly shown in Fig. 7, each cell 1 comprises an openable and closeable lid 30, which is arranged on the top side 61 of the wing 60 and is preferably flush with the top side 61 when closed. In the same manner as explained above in relation to Figs. 3-6, each lid 30 comprises a first and second lid portion 31, 36, having the functions described above.

The casing 21, including the lid 30 and the casing main portion 25, accommodates and protects the elements of the battery cells 1. Also, the casing 21 protects surrounding components of the airframe from contacting the elements of the cells 1, in particular the electrolyte 6.

The casing main portion 25 can be manufactured from metal, in particular from aluminum or from an aluminum alloy. Alternatively, the casing main portion 25 can be formed from a composite material such as a fibre metal laminate (FML) or a fibre-reinforced synthetic material, e.g. carbon fibre-reinforced plastic material (CFRP), in particular carbon fibre-reinforced thermoplastic preferably having high temperature resistance.

Further, the lid 30 comprising the portions 31, 36, may be formed from metal or from a composite material. The same materials as described above for the casing main portion 25 can be used for the lid 30.

By using an FML, a casing 21 having good stiffness and some ductility can be obtained. Further, FML may be advantageous with regard to fire protection. The fibre metal laminate (FML) can comprise, for example, a plurality of thin aluminum layers, each having a thickness of for example from 0,2 mm to 0,3 mm, and a plurality of fibre-reinforced plastic layers, for example comprising glass fibres embedded in the synthetic matrix, in alternating arrangement.

When a fibre-reinforced synthetic material is used to produce the casing 21, it is preferable to use a fibre-reinforced thermoplastic material, e.g. thermoplastic reinforced with carbon fibres.

Using a thermoplastic as matrix of the fibre-reinforced synthetic material, in particular in combination with reinforcing glass fibres embedded therein, makes it possible to achieve good electrical insulation. Moreover, thermoplastic may be advantageous for a structural component 78 in which the metal-oxygen battery is integrated, as it can sustain relatively high temperatures without being damaged, and the softening process at increased temperature is reversible if the temperature drops. The metal-oxygen battery generates at least some heat and the thermoplastic advantageously is not easily damaged by increased temperature, which may be advantageous should heating of the battery beyond the usual maximum temperature occur. Also, thermoplastic offers some resistance to chemical attack.

In order to provide electrical insulation as well as protection against chemical attack, the casing 21 may be provided with one or more protective layer(s), such as an isolator 28, schematically shown in Figs. 3 and 5. The protective layer(s) may be applied, for example, along the inside surfaces of the casing main portion 25 and the lid 30.

For example, an electrically insulating layer can be provided on the inside of the bottom flange or lower wall of the casing main portion 25, as well as on the inside of the upright flanges or side walls of the casing main portion 25, in order to provide electric isolation of the battery cell components against the casing main portion 25 and also the surrounding structural elements of the airframe.

The electrically insulating layer 28 may also prevent chemical and/or electrochemical interaction of components of the battery cell 1 and the casing main portion 25, or an additional layer may be provided for the purpose of chemical and/or electrochemical protection.

The lid 30 may be protected on the inside of the portions 31, 36 in a manner analogous to the casing main portion 25.

If the inner space of the U-shaped component 25 of the spar 78, formed as the casing main portion 25, is configured to accommodate several cells 1, e.g. by providing compartments, it is envisaged to isolate the compartments and thus the cells 1 from each other not only mechanically but also electrically. The insulating layer described above may be used to implement such insulation.

The metal-oxygen battery, comprising cells 1 housed in a casing 21 configured as a part of an adapted wing spar 78 as described above with respect to Figs. 3-7 and 10, makes it possible to achieve structural integration in combination with good accessibility and separation from the passenger cabin.

Even though the battery cells 1 significantly contribute to the weight of the wings spars 78 of Fig. 7, the additional weight due to the cells 1 could replace some or all of the kerosene that would be stored in a conventional wing. In a hybrid design, for instance, the wings 60 could be provided with an additional tank or additional tanks for storing liquid fuel, e.g. hydrocarbon fuel, such as kerosene, in addition to the multifunctional wing spars 78 shown in Fig. 7.

In the metal-oxygen battery cells 1, 101 of Figs. 1-8, 10, a small quantity of oxygen is continuously supplied on the side of the cathode 4, 104. Oxygen, or air, may be supplied under pressure to the cathode 4, for example via a distributing plate or manifold plate. Preferably, the oxygen is supplied to the cathode 4 by supplying air via a vessel and a controllable pump, both of which are not displayed in the figures, in order to make sure that the oxygen is supplied at a uniform, controllable pressure.

In order to implement the oxygen supply on the cathode side in the embodiment of Figs. 3-8, 10, the casing main portion 25 can be provided with a pattern of passages and openings leading from the passages to the cathode 4, for example.

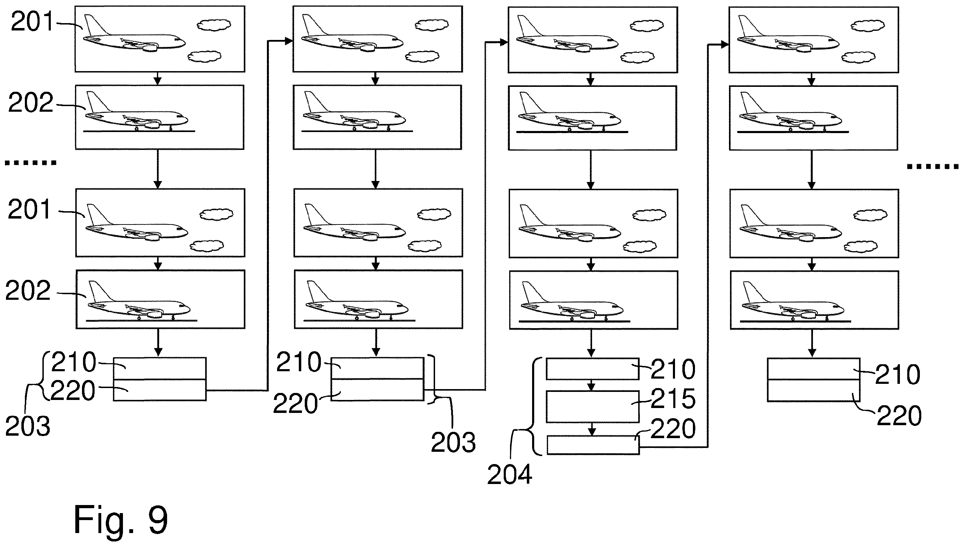

Figs. 8 and 9 illustrate a method of operating an airplane 90 equipped with battery cells 1 in the wings 60 as described above with reference to Figs. 3-7 and 10, and a method of restoring power to the battery cells 1.

Fig. 8 shows how the replacement of the electrolyte 6 of the battery cells 1 integrated into the wing spar 78 may be performed.

In Fig. 8, the aircraft 90 is at rest and parked on the ground, at the airport. The aircraft 90, schematically shown in Fig. 8, is a hybrid or electrical airplane, which means that its propulsion system at least in part or fully relies on electrical energy.

A ground vehicle 95 comprising a tank 96 provided with compartments for fresh and spent electrolyte, which may be called an "electrolyte bowser", has parked next to the wing 60 of the hybrid or electrical aircraft 90. Replacing of the spent electrolyte 48 in the $Zn-O_2$ cells 1, located in the wing spars 78, is taking place in the step shown in Fig. 8. The lid portions 31 of the cells 1 are opened on the upper side 61 of the wing 60, the contaminated or spent electrolyte 48 is removed from the opened $Zn-O_2$ batteries integrated in the wing box by a worker 98 using, for example, a hose 45 and a pump as described above with reference to Fig. 4, and fresh electrolyte 58, e.g. a 30% KOH aqueous solution, is then refilled into the cells 1 in a manner analogous to Fig. 5, using a hose 55 and a pump as well. The bowser 95 may comprise, for example, separate pumps and hoses 45, 55 for spent and contaminated electrolyte, or a common hose and pump for both.

Instead of a tank 96 having compartments for fresh and spent electrolyte respectively, the bowser 95 can be provided with separate, individual tanks for fresh and spent electrolyte. Alternatively, even two different vehicles 95, one for removing the spent electrolyte 48, and another one for supplying the fresh electrolyte 58, are conceivable.

At larger and busy airports, stationary pipelines 97, schematically indicated in Fig. 8, can be provided for removing spent electrolyte 48 and supplying fresh electrolyte 58.

The operation of electrolyte replacement in Fig. 8 may take a few minutes, but the effort, duration and cost for this operation are considerably reduced compared e.g. to the current procedures of kerosene filling. Also, the electrolyte 6 is comparatively environmentally friendly.

It is envisaged that several electrolyte refillings could be made before a replacement of the anode 3 would be necessary, especially since the build-up of ZnO is considerably reduced by frequent electrolyte replacements. The electrolyte 6 may be replaced, in some exemplary embodiments of the invention, after every second or third flight.

For anode exchange, both lid portions 31, 36 of the cells 1 are opened on the top side 61 of the wing 60, the anodes 3 are unlocked by operating a release mechanism of the mounting devices 27, and the anodes 3 are lifted out of the cells 1. The anode replacement can, for instance, in an embodiment of the method be carried out by a ground vehicle (not shown in the Figures) that replaces the spent anodes 3 with new anodes 3 using a robotic arm.

It is conceivable that spent anodes 3 are cleaned, by a chemical or mechanical process, from their zinc oxide build-ups, and re-used a certain number of times. Forming the anode 3 as a solid metal sheet having plain, smooth side surfaces may facilitate mechanically processing the anode 3 after removal from the cell, e.g. by grinding, for removing the ZnO passivation layer.

Fig. 9 schematically illustrates a method of restoring power when operating an airplane 90 having, for example, a regular schedule of flights, indicated as steps 201. Between the flights 201, after landing and before departing, the airplane 90 is parked on the ground, at the airport, which is indicated by step 202. In the exemplary method of Fig. 9, after two consecutive flights 201, a step 203 of replacing the spent electrolyte 48 of the battery cells 1 by fresh electrolyte 58 is carried out. Step 203 comprises a substep 210 of removing the spent electrolyte 48 from the cell 1 and a substep 220 of refilling fresh electrolyte 58. Hydrogen trapped within the metal-oxygen battery is vented simultaneously with replacing the contaminated electrolyte 48. Step 203 also includes opening the lid portions 31 before the electrolyte replacement, and re-closing them afterwards.

The sequence of steps 201, 202, 201, 202, 203 just described can be performed again. Thereafter, after two further flights 201, a step of replacing both the electrolyte 6 and the anodes 3 of the cells 1 is carried out. Thus, after the emptying substep 210, a substep 215 of removing the spent anodes 3 and reinserting fresh anodes 3 is carried out, before refilling fresh electrolyte 58 in substep 220. Step 204 includes opening both lid portions 31, 36 in order to perform the "complete mechanical recharge" and also change the anode 3, and re-closing both lid portions 31, 36 after fresh electrolyte 58 has been refilled.

The sequence of steps ...201, 202, 201, 202, 203, 201, 202, 201, 202, 203, 201, 202, 201, 202, 203... can be repeated as shown in Fig. 9. The anode 3 may be changed depending on ZnO layer buildup, or on a regular basis, e.g. based on collected data on ZnO buildup.

The pH value of the electrolyte 6 can be monitored and, instead of a regularly scheduled electrolyte replacement, substeps 210, 220 can be carried out if the decreasing pH value approaches or reaches a predefined threshold, for example a pH of 13.

Herein, hence, there is disclosed also a method comprising installing Zn-O$_2$ cells 1 in a multifunctional airframe-integrated casing 21, in the embodiment of Fig. 7 in a component 25 of the wing spar 78, connecting repeated cells 1 in series with an on-board battery system, mechanically replacing the electrolyte 6, 48 when the pH thereof drops approaching 13, and mechanically replacing the anodes 3 of the cells 1 when significant buildup of ZnO starts on the anode.

The invention thus provides an aircraft or spacecraft that can be supplied in a powerful, safe and environmentally friendly manner with electrical energy. The battery power can be restored by easy and fast mechanical recharging, via electrolyte replacement and anode replacement. A metal-oxygen battery, in particular a Zn-O$_2$ battery, for use in an aircraft or spacecraft and shaped such that mechanical recharging can take place is provided. A design of the casing 21 that can be opened for replacement of the electrolyte 6 and anode 3 is proposed. Also, a possibility to vent hydrogen gases in the battery is provided.

In the embodiment described above, the electrical output of the cells 1 is used to power propulsion devices 94, which helps to reduce exhaust gases from combustion. Only some H$_2$ may be vented. The system proposed herein provides a significant improvement over Li-ion based systems in terms of reduced risk of fire and smoke, and reduced toxicity. In advantageous manner, an increased energy density compared e.g. to Li-Ion rechargable batteries is combined with a structural function of the battery.

Although the invention has been completely described above with reference to preferred embodiments, the invention is not limited to these embodiments but may be modified in many ways.

Even though the use of a wing spar or wing spars for accommodating the battery/batteries, as well as a dedicated cross-sectional design of the wing spar to accommodate the battery/batteries, have been described above with respect to an embodiment, it is also conceivable to integrate or semi-integrate metal-oxygen battery cells into other elongate structural components of the airplane 90, in particular into other elongate structural components of beam-type shape. For example, battery cells can be integrated into an elongate structural component forming part of the aircraft fuselage.

Even though the casing main portion 25 has been described above as being provided with a U-shaped cross-section, other cross-sectional shapes capable of providing some interior space or hollow may be conceivable.

List of reference signs

| | |
|---|---|
| 1 | battery cell |
| 3 | anode |
| 4 | cathode |
| 6 | electrolyte |
| 10 | separator |

| | |
|---|---|
| 13 | end face |
| 14 | leg portion |
| 21 | casing |
| 25 | casing main portion |
| 27 | mounting device |
| 28 | isolator |
| 30 | lid |
| 31 | first lid portion |
| 36 | second lid portion |
| 40 | electrolyte removing device |
| 45 | hose |
| 46 | pump |
| 47 | container |
| 48 | spent electrolyte |
| 49 | escaping hydrogen |
| 50 | electrolyte refilling device |
| 55 | hose |
| 56 | pump |
| 57 | container |
| 58 | fresh electrolyte |
| 59 | removal of anode |
| 60 | wing |
| 61 | top side |
| 64 | leading edge |
| 66 | trailing edge |
| 78 | wing spar |
| 79 | wing rib |
| 85 | cell boundary |
| 90 | airplane |
| 91 | fuselage |
| 92 | vertical stabilizer |
| 93 | horizontal stabilizer |
| 94 | propulsion device |
| 95 | ground vehicle |
| 96 | tank |
| 97 | pipeline |
| 98 | worker |
| 101 | battery cell |
| 103 | anode |
| 104 | cathode |
| 106 | electrolyte |
| 110 | separator |
| 115 | conductor |
| 119 | electrical load |
| 201 | step |
| 202 | step |
| 203 | step |
| 204 | step |
| 210 | substep |
| 215 | substep |
| 220 | substep |

**Claims**

1. Aircraft or spacecraft (90), in particular airplane, comprising at least one metal-oxygen battery (1) which comprises at least an anode (3), a cathode (4) and an electrolyte (6), wherein the metal-oxygen battery (1) is configured and arranged in the aircraft or spacecraft (90) in such a manner that at least the electrolyte (6, 48) can be replaced for at least partially restoring electrical power to be supplied by the metal-oxygen battery (1) to one or more devices (94) in the aircraft or spacecraft (90).

2. Aircraft or spacecraft according to claim 1,
   **characterized in that** the metal-oxygen battery (1) is configured and arranged in the aircraft or spacecraft (90) so as to enable exchange of the anode (3).

3. Aircraft or spacecraft according to claim 1 or 2,
   **characterized in that** the metal-oxygen battery (1) is integrated in a structure of the aircraft or spacecraft (90), in particular an airframe, wherein the metal-oxygen battery (1) in particular is integrated in a structural component (78) or in structural components (78) of the aircraft or spacecraft (90).

4. Aircraft or spacecraft according to at least one of the preceding claims,
   **characterized in that** the metal-oxygen battery (1) forms part of a load-bearing structural component (78) of the aircraft or spacecraft (90), in particular of a beam-type structural component (78).

5. Aircraft or spacecraft according to claim 3 or 4,
   **characterized in that** one or more part(s) (3, 4, 25) of the metal-oxygen battery (1) is/are configured and arranged so as to contribute to the mechanical load-bearing capacity of the structural component (78).

6. Aircraft or spacecraft according to at least one of claims 3 to 5,
   **characterized in that** the metal-oxygen battery (1) is integrated in a structural component (78) of a wing (60), in particular a wing spar (78).

7. Aircraft or spacecraft according to at least one of the preceding claims,
   **characterized in that** the cathode (4) is formed with a hollow cross-sectional shape, in particular a U-type shape.

8. Aircraft or spacecraft according to at least one of the preceding claims,
   **characterized in that** the anode (3) is arranged, in an operational state of the metal-oxygen battery (1), between two substantially wall-shaped leg portions (14) of the cathode (4) and in particular **in that** the anode (3) is configured as a flat, plate-shaped element.

9. Aircraft or spacecraft according to at least one of the preceding claims,
   **characterized in that** the aircraft or spacecraft (90) comprises one or more electrical propulsion devices (94) or hybrid propulsion devices (94) or a combination thereof, and **in that** the metal-oxygen battery (1) is configured to supply electrical energy for powering the electrical and/or hybrid propulsion devices (94) at least partially.

10. Aircraft or spacecraft according to at least one of the preceding claims,
    **characterized in that** the metal-oxygen battery (1) is a zinc-oxygen battery (1), wherein the anode (3) comprises zinc or a zinc alloy.

11. Aircraft or spacecraft according to at least one of the preceding claims,
    **characterized in that** the metal-oxygen battery (1) comprises an openable and closeable lid (30) enabling access to an interior of a battery cell (1) or part thereof when the lid (30) is opened, wherein the lid (30) in particular comprises at least two openable and closeable lid portions (31, 36).

12. Method of at least partially restoring electrical power to be supplied by a metal-oxygen battery (1) to one or more devices (94) in an aircraft or spacecraft (90), in particular an aircraft or spacecraft (90) according to one of the preceding claims, comprising a step (203, 204) of replacing at least a contaminated electrolyte (6, 48) of the metal-oxygen battery (1) by fresh electrolyte (6, 58).

13. Method according to claim 12,
    **characterized in that** the step (203, 204) of replacing at least the contaminated electrolyte (6, 48) is carried out while the aircraft or spacecraft (90) is on the ground, in particular while the aircraft (90) is parked at an airport.

14. Method according to at least one of claims 12 or 13,
    **characterized in that** the method further comprises a step (215) of replacing a passivated anode (3) of the metal-oxygen battery (1) with a fresh anode (3).

15. Method according to at least one of claims 12 to 14,
    **characterized in that** the method further comprises venting hydrogen accumulated within the metal-oxygen battery (1).

Fig. 1

Fig. 2

Fig. 3

Fig. 4

Fig. 5

Fig. 6

Fig. 7

Fig. 10

EP 4 131 585 A1

Fig. 8

Fig. 9

Europäisches
Patentamt

European
Patent Office

Office européen
des brevets

# EUROPEAN SEARCH REPORT

Application Number

EP 21 18 9267

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 219 672 A (RAMSEY JR JOHN W [US]) 15 June 1993 (1993-06-15) * abstract * * claim 8 * | 1-15 | INV. H01M12/06 |
| A | US 2017/050533 A1 (WEI XIBO [CN] ET AL) 23 February 2017 (2017-02-23) * claims 7, 8 * | 1-15 | |

TECHNICAL FIELDS
SEARCHED     (IPC)

H01M

The present search report has been drawn up for all claims

| Place of search | Date of completion of the search | Examiner |
|---|---|---|
| Munich | 18 January 2022 | Koessler, Jean-Luc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 18 9267

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2022

| Patent document cited in search report | | Publication date | Patent family member(s) | Publication date |
|---|---|---|---|---|
| US 5219672 | A | 15-06-1993 | NONE | |
| US 2017050533 | A1 | 23-02-2017 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015016101 A1

- WO 2015115480 A1

**Non-patent literature cited in the description**

- **LI, Y. et al.** Advanced zinc-air batteries based on high-performance hybrid electrocatalysts. *Nat. Commun.,* 2013, vol. 4, 1805